# EUROPÄISCHE PATENTSCHRIFT

(11) **EP 3 508 282 B1**
(45) Veröffentlichungstag und Bekanntmachung des Hinweises auf die Patenterteilung: **17.02.2021**
(21) Anmeldenummer: 18214137.4
(22) Anmeldetag: 19.12.2018
(51) Int. Cl.: B05D 5/06, C04B 28/04

(54) **VERFAHREN ZUR HERSTELLUNG EINES BETONELEMENTS MIT EINGEFÄRBTER OBERFLÄCHENSCHICHT**
METHOD FOR MANUFACTURING A CONCRETE BLOCK WITH A COLORED SURFACE LAYER
PROCÉDÉ DE FABRICATION D'UN ÉLÉMENT DE BÉTON AVEC COUCHE DE SURFACE COLORÉE

(30) Priorität: 09.01.2018 DE 102018100354; 07.05.2018 DE 102018110853
(43) Veröffentlichungstag der Anmeldung: 10.07.2019
(73) Patentinhaber: Braun Steine GmbH, 73340 Amstetten (DE)
(72) Erfinder: Brunkhorst, Andreas, 71642 Ludwigsburg (DE)
(74) Vertreter: RPK Patentanwälte Reinhardt, Pohlmann und Kaufmann Partnerschaft mbB

(56) Entgegenhaltungen:
- EP-A2- 1 394 813
- WO-A1-2015/022168
- AT-B- 118 638
- DE-T2- 69 716 936
- JP-A- S63 206 343
- DATABASE WPI Week 201167 Thomson Scientific, London, GB; AN 2011-M48353 XP002790809, & CN 102 173 666 A (HARBIN INST TECHNOLOGY) 7. September 2011 (2011-09-07)

## Beschreibung

### Stand der Technik

Die Erfindung betrifft ein Verfahren zur Herstellung eine Betonelements mit einer eingefärbten Oberflächenschicht, insbesondere eines Betonsteins mit einem Formkörper oder einer Betonfläche, nach dem Oberbegriff des unabhängigen Anspruchs.

Es ist bekannt, Betonelemente, wie etwa Betonsteine, an der Oberfläche zu behandeln, um diesen eine besondere Oberflächengestaltung oder Oberflächenfarbe zu verleihen. Um einem Stein eine Rostfarbe zu verleihen, kann eine Betonbeize aufgetragen werden. Die behandelte Oberfläche kann sich jedoch in stärker belasteten Bereichen nach einiger Zeit ablösen, so dass die unbehandelte Oberfläche wieder durchscheint. Auch haben eingefärbte Oberflächen ein künstliches Aussehen wie gemalt, mit hell und dunkel gefärbten Bereichen.

Üblicherweise besteht ein Betonstein aus einem dicken Kernbeton mit gröberem Zuschlag und einem dünnen Vorsatzbeton aus feinerem Material. Der Vorsatzbeton kann eingefärbt werden oder an der Oberfläche nachbehandelt werden. Bei einem Auftrag einer Art "Färbemittel", das mit einer Lasur vergleichbar ist, entsteht ein relativ homogener Farbeindruck. Sind changierende Farbgestaltungen in der Betonsteinoberfläche gewünscht, lassen sich diese durch Einmischen von unterschiedlichen Farben erreichen.

Besteht der Betonstein nur aus einer Betonmischung ohne Vorsatz, werden farbige Steine komplett durchgefärbt. Graue Steine können auch ohne zusätzliche Farbe gefertigt werden.

Beton wird aus einer Mischung von Zement und Zuschlag hergestellt. Der Zement dient als Bindemittel, das den Zuschlag, beispielsweise Steingranulat und dergleichen, in Gegenwart von Wasser in stark alkalischer Umgebung abbindet.

Die Festigkeit des Betons entsteht unter Wasseraufnahme durch eine exotherme Reaktion der Auskristallisierung von Klinkerbestandteilen des Zements, die längere Zeit anhalten kann und endgültige Festigkeitswerte erst lange nach dem Betonguss erreicht werden. Nach der Norm zu Festigkeitsklassen von Zement (DIN 1164-2013-10) ist jedoch bei normalen Temperatur- und Feuchtigkeitsbedingungen die Normfestigkeit nach 28 Tagen erreicht.

Aus der DE 697 16 936 T2 ist ein Verfahren zum Färben von Beton und anderen Mischungen auf Basis von Zement unter Verwendung eines Metalls zur Farbgebung bekannt. Hierbei wird Kupfer oder eine kupferhaltige Metalllegierung zu ungehärtetem Beton oder einer anderen Mischung auf Basis von Zement gegeben, um darin chemisch unter Erzeugung eines blauen oder grünen Farbtons zu reagieren.

Aus der EP 1 394 813 A2 ist eine Betonmasse zur Herstellung eines Sicherheitsgefäßes bekannt, welche Zement, Zuschlag und einen Gehalt eines Eisen- und Kupferpulvers aufweist.

### Offenbarung der Erfindung

Es ist die Aufgabe der Erfindung, ein Verfahren zur Herstellung eines Betonelements insbesondere eines Betonsteins zu schaffen, der ein natürliches Aussehen einer Farbwirkung zeigt.

Die Aufgabe wird durch die Merkmale des unabhängigen Anspruchs gelöst. Günstige Ausgestaltungen und Vorteile der Erfindung ergeben sich aus den weiteren Ansprüchen, der Beschreibung und der Zeichnung.

Nach der Erfindung wird ein Verfahren zur Herstellung eines Betonelements mit einer eingefärbten Oberflächenschicht, insbesondere eines Betonsteins mit einem Formkörper oder einer Betonfläche vorgeschlagen, welches Betonelement aus wenigstens einer Mischung von Zement und einem Zuschlag mit einem unedlen Metall gebildet wird, wobei das unedle Metall chemisch unter Erzeugung eines Farbtons reagiert, wobei ein Gehalt an Eisen als unedlem Metall in den Zuschlag beigegeben und wenigstens eine Oberflächenschicht mit einer Dicke von wenigstens 5 mm gebildet wird, wobei der pH-Wert der Oberflächenschicht durch Zugabe eines sauren Mediums bei der Herstellung der Mischung und/oder beim Abbinden der Mischung und/oder nach dem Abbinden der Mischung zur Erzeugung einer sich im Beton bildenden Oxidfarbe durch Oxidation des Eisens in wenigstens der Oberflächenschicht reduziert wird, wobei sich eine natürlich wirkende Patina eines rostenden Metallkörpers in dem Bereich ausbildet, der das unedle Metall aufweist. Das saure Medium kann in die Mischung eingegeben werden oder mit der Oberfläche der Mischung in Kontakt gebracht werden, beispielsweise aufgesprüht, aufgepinselt oder dergleichen werden.

Auf diese Weise kann sichergestellt werden, dass die Oxidation des Eisens durch die gesamte Oberflächenschicht hindurch erfolgt, woraus sich ein natürliches Erscheinungsbild einer oxidierten Oberfläche des Betonsteins ergibt. Ein Abplatzen einer nachträglich aufgetragenen Farbschicht oder Behandlungsschicht kann nicht erfolgen. Das Eisen als unedles Metall steht für ein reines Metall oder auch ein Gemisch aus Eisen und verschiedener anderer unedler Metalle.

Das saure Medium kann vorzugsweise eine wässrige Flüssigkeit sein, insbesondere eine Säure oder ein Säuregemisch.

Das Eisen wird als Zuschlag gewertet und die Menge üblicherweise in kg/m³ angegeben. Dadurch, dass das Eisen zugegeben wird und eine nennenswerte Oxidationsreaktion des Eisens erst danach einsetzt, bildet sich eine ganz natürlich wirkende Patina nicht nur an der Oberfläche, sondern auch in der Tiefe der Betonmasse, bzw. in dem Bereich, der das Eisen aufweist, aus.

Im Zuschlag ist, bezogen auf den Gesamtanteil an Zuschlag, 1% bis 15%, vorzugsweise 2% bis 8%, Eisen als unedles Metal eingemischt, das dann feinst verteilt im Betonstein vorhanden ist, so dass der Beton oxidieren, bei Zugabe von Eisen als unedlem Metall beispielsweise rosten kann.

Nach einer günstigen Ausgestaltung kann das Eisen in Form von Metallpulver und/oder Metallgranulat und/oder metallhaltiger Lösung mit Ionen des Eisens, insbesondere einer wässrigen Lösung mit Ionen eines Eisens, in die Oberflächenschicht eingearbeitet werden. Dabei kann insbesondere das Eisen in einer einzigen Körnung vorliegen oder in wenigstens zwei sich um wenigstens 30% in der mittleren Korngröße unterscheidenden Körnungen, vorzugsweise um wenigstens 50%, besonders bevorzugt um wenigstens 100% in der mittleren Korngröße unterscheidenden Körnungen, beigegeben werden. Das Eisen kann vorteilhaft dem Zuschlag beigegeben werden und einfach in die Herstellung eines Betonsteins integriert werden.

In einer Ausführung wird das saure Medium direkt während der Herstellung des Betonsteins in die nasse Mischung aus Zement und Zuschlag gegeben. Insbesondere kann dies in einem so genannten "Wetcast"-Verfahren erfolgen. Häufig wird in einem solchen Verfahren Gießbeton in eine Gussform gegeben und gepresst. Optional kann das saure Medium zuerst in die Gussform gegeben und dann die nasse Mischung aus Zement und Zuschlag darauf gegossen werden. Die Oberfläche der Mischung wird so in einen innigen Kontakt mit dem sauren Medium gebracht.

Alternativ oder zusätzlich kann eine Anwendung eines sauren Mediums auch in einem so genannten "Drycast"-Verfahren erfolgen. Bei einem "Drycast"-Verfahren ist die Mischung aus Zement und Zuschlag trockener als bei einem "Wetcast"-Verfahren. Optional kann jeweils zusätzlich oder alternativ ein saures Medium während oder nach dem Abbinden des Betonsteins hinzugegeben werden. Dazu kann das saure Medium auf die Oberflächenschicht aufgesprüht oder in anderer Weise aufgetragen werden.

Das saure Medium reduziert den hohen pH-Wert in der Oberflächenschicht und ermöglicht die Oxidation des Eisens. Das saure Medium kann jeweils mit Eisen und/oder Kationen des Eisens versetzt sein. Vorteilhaft kann als saures Medium Salzsäure, Phosphorsäure, Schwefelsäure, Essigsäure, Zitronensäure, Amidoschwefelsäure, säurehaltige Reinigungsmittel, saure Beize, beispielsweise Eisen(III)-Chlorid-Beize, oder Mischungen davon verwendet werden. Ein günstiger pH-Wert des sauren Mediums liegt bei 0 bis 1. Der Säuregehalt liegt vorzugsweise bei 7% bis 15%. Geringere und höhere Säuregehalte bis 37% sind optional möglich. Sehr saure, auch negative pH-Werte können beispielsweise bei Betonelementen vorteilhaft sein, um den chemischen Prozess der Oxidation bei niedrigen Temperaturen zu beschleunigen.

Durch Applikation eines sauren Mediums wird der pH-Wert des Betons in dem Bereich, der dem saurem Medium ausgesetzt ist, beispielweise in der Oberflächenschicht, reduziert, so dass ein beschleunigtes Oxidieren möglich ist. Die Zugabe des sauren Mediums kann so erfolgen, dass dieses der Mischung beigegeben wird oder die Oberfläche in Kontakt mit dem sauren Medium gebracht wird.

Nach einer günstigen Ausgestaltung kann der Formkörper wenigstens bereichsweise aus einer Mischung von Zement und einem Zuschlag gebildet werden und das Eisen ist Bestandteil des Zuschlags. Vorzugsweise kann die Oberflächenschicht, insbesondere vor und während des Abbindens der Mischung, einen sauren pH-Wert aufweisen oder zumindest einen gegenüber üblichem Beton, der beim Abbinden stark alkalisch ist, einen reduzierten pH-Wert, der eine Oxidation des Eisens wenigstens in der Oberflächenschicht ermöglicht.

Die üblicherweise alkalischen Eigenschaften des Betons werden beispielsweise als Korrosionsschutz für Stahlarmierungen in Beton ausgenutzt. Wenn nur die Oberflächenschicht mit dem Eisen versetzt ist, können in der Tiefe des Formkörpers nach wie vor die alkalischen Eigenschaften bestehen und genutzt werden.

Auch im abgebundenen Zustand kann der Beton noch alkalisch sein: Kurz nach dem Mischen des Betons nimmt das Anmachwasser einen sehr hohen pH-Wert über 12,5 an, weil Alkalien aus dem Zement in Lösung gehen. Auch etwaiges Wasser in den Poren des Betonsteins im abgebundenen Zustand weist stets den hohen pH-Wert auf.

Nach einer günstigen Ausgestaltung kann der Formkörper aus einem ersten Bereich aus Kernbeton und einem zweiten Bereich aus Vorsatzbeton gebildet werden und der zweite Bereich die Oberflächenschicht aufweisen. Vorzugsweise kann der zweite Bereich, d.h. der Vorsatzbeton, durch die Oberflächenschicht gebildet werden. Optional kann der erste Bereich zusätzlich vor einer Oxidationsreaktion ebenfalls von dem Eisen durchsetzt sein. Eine typische Dicke des Vorsatzbetons bei Betonsteinen ist beispielsweise 10 mm. Die Gestaltung des Betonsteins und seine Farbgebung kann an bestehenden Anforderungen abgepasst werden. Ist der Betonstein komplett mit Eisen durchsetzt, kann dieser durchgehend die Farbe des oxidierten Eisens aufweisen. Ist nur die Oberflächenschicht mit dem Eisen versehen, kann der Rest des Betonsteins, insbesondere ein Kernbeton, beim Aushärten nach wie vor seine alkalischen Eigenschaften aufweisen.

Nach einer günstigen Ausgestaltung können wasserabweisende und/oder ölabweisende Mittel in die Mischung zugegeben werden und/oder auf die Oberflächenschicht appliziert werden. Damit kann die Oberflächenschicht vor Verschmutzung geschützt werden. Vorteilhaft kann einer Calciumauslagerung, die durch Säureeinwirkung hervorgerufen wird, entgegen gewirkt werden, indem flüssige Silikate in die Mischung zugegeben und/oder auf die Oberflächenschicht appliziert werden. Die Silikate reagieren als Schutz vor aggressiven Medien mit Zementbestandteilen wie Calcium.

Ferner ist es möglich, den Wassergehalt des Betonsteins zu beeinflussen, damit der Betonstein ausreichend lange ein ausreichender Feuchtegehalt zur Oxidation des Eisens zur Verfügung steht und eine reduzierte und kontrollierte Abnahme des Säuregehalts an oder in der Oberflächenschicht erfolgen kann.

Nach einer günstigen Ausgestaltung können in den Zuschlag der Mischung Partikel aus edlerem Metall und/oder glanzgebende Partikel zugemischt werden. Dies erlaubt einen dekorativen Glanzeffekt oder Glitzereffekt in der fertigen Oberflächenschicht.

Nach einer günstigen Ausgestaltung kann die Oxidation des Eisens in der Oberflächenschicht durch Oberflächenbearbeitung unterstützt werden. So kann insbesondere wenigstens eines der Verfahren eingesetzt werden wie Schleifen, Strahlen, Bürsten, Klopfen, Kollern, Fräsen, Brechen. Hierdurch können gezielt einzelne Bereiche mit Metallpartikeln freigelegt werden und die Oxidation unterstützt werden. Ebenso kann gezielt eine bestimmte Oberflächentextur erzeugt werden.

Nach einer günstigen Ausgestaltung können wenigstens 5%, vorzugsweise wenigstens 20%, besonders bevorzugt wenigstens 30%, ganz besonders bevorzugt wenigstens 50%, des Eisens bezogen auf das Gewicht an Eisen, das im Zuschlag zugegeben wurde, später, nach der Oxidation zumindest im Anfangsstadium in oxidierter Form vorliegen. Über die Zeit kann das Eisen weiter oxidieren.

Nach einer günstigen Ausgestaltung kann der Betonstein über eine Lagerzeit in einer feuchten Atmosphäre gehalten werden. Optional kann der Betonstein über eine Lagerzeit mit einer wasserundurchlässigen Folie oder dergleichen umhüllt werden und/oder gezielt einer Bewitterung ausgesetzt werden. Dadurch kann der Betonstein vor einer Auslieferung an eine Kunden während der Lagerhaltung ausreichend durchreagieren. Die Bewitterung kann beispielsweise durch Einwirken von natürlichen Umgebungseinflüssen erfolgen.

Ferner kann die Oxidation des Eisens dadurch beschleunigt werden, dass das Betonelement einer erhöhten Temperatur ausgesetzt wird.

Im Folgenden wird eine im Verfahren hergestellte Betonmasse beschrieben, die aus wenigstens einer Mischung von Zement und einem Zuschlag gebildet ist, zur Herstellung eines Betonelements mit einer eingefärbten Oberflächenschicht.

Es wird vorgeschlagen, dass ein Gehalt an Eisen als unedlem Metall zugegeben ist und dass das Eisen zur Erzeugung einer sich im Beton bildenden Oxidfarbe durch Oxidation in wenigstens einer Oberflächenschicht vorgesehen ist.

Das Betonelement kann insbesondere ein Betonstein sein, bei dem eine Betonmasse zu einem Stein mit oder ohne Vorsatzbeton geformt und anschließend ausgehärtet wird. Der Betonstein wird üblicherweise zum Belegen von begehbaren und/oder befahrbaren Flächen verwendet. Ebenso kann der Betonstein ein dekorativer Formkörper sein, wie beispielsweise eine Skulptur der dergleichen, der nicht zum Begehen oder Befahren vorgesehen ist. Das Betonelement kann ferner eine Betonfläche sein, bei der die Betonmasse vor Ort aufgetragen und ausgehärtet wird. Die Betonmasse kann auf einen Untergrund aufgetragen werden, beispielsweise auf eine Wand als Fassade, auf eine Bodenfläche als Belag, oder dergleichen.

Vorteilhaft kann das Eisen gleichmäßig in der Oberflächenschicht verteilt sein. Dann kann dieses durch eine geeignete chemische Reaktion, insbesondere Oxidation, die gesamte Oberflächenschicht einfärben, wobei ein natürliches Erscheinungsbild der Oberfläche des Betonelements entsteht. Die Farbwirkung durch die Oxidation bildet sich erst beim oder nach dem Abbinden der Betonmasse aus. Die Oberflächenschicht kann gegebenenfalls ihre Farbwirkung durch anhaltende Oxidation des Eisens im Laufe der Zeit weiter verändern.

Optional kann das Eisen auch in der kompletten Betonmasse verteilt sein, welche dann durch eine geeignete chemische Reaktion, insbesondere Oxidation, komplett einfärben kann, wobei ein natürliches Erscheinungsbild der Oberfläche der Betonmasse entsteht.

Das unedle Metall kann Eisen als einziges Metall sein oder auch eine Mischung verschiedenartiger, insbesondere unedler Metalle. Günstig sind Metalle, beispielsweise Eisen, Kupfer, Zink oder dergleichen, die nach Oxidation in der Oberflächenschicht ein farbiges Erscheinungsbild hervorrufen, wie etwa Eisen mit Rost oder Kupfer mit Grünspan. Es ergibt sich eine verbesserte Farbbrillanz durch die sich im Beton bildende Oxidfarbe und eine natürliche wirkende Patina der Oberflächenschicht.

Da das Eisen wenigstens in einer Oberflächenschicht verteilt ist, die vorzugsweise mindestens 5 mm dick ist, oder in der gesamten Betonmasse verteilt ist, kann es nicht zu unerwünschten Abplatzungen kommen. Die Oberflächenschicht ist innig mit dem Rest des Formkörpers verbunden, insbesondere stoffschlüssig verbunden.

Selbst bei Beschädigungen der Oberfläche bleibt ein Farbeindruck erhalten, da das Eisen wenigstens in der wenigstens 5 mm dicken Oberflächenschicht enthalten ist und dort oxidieren kann. Auch freie Oxidpartikel, beispielsweise Rostpartikel, können auf der Oberfläche liegen, die abgenutzt werden. Dabei können weitere Oxidationsprozesse, beispielsweise durch Bewitterung, ablaufen, so dass ein veränderter Farbverlauf der Steinoberfläche möglich ist.

Die Betonmasse kann vor Ort zubereitet werden oder als Rohmasse angeliefert und verarbeitet werden, beispielsweise in Form gegossen werden.

Nach einer günstigen Ausgestaltung kann das Eisen in Form von Metallpulver und/oder Metallgranulat und/oder metallhaltiger Lösung, insbesondere einer wässrigen Lösung mit Ionen wenigstens des Eisens, in die Betonmasse eingearbeitet sein. Dies ermöglicht eine homogene Verteilung des Eisens und kann auf einfache Weise in die übliche Herstellung einer Betonmasse integriert werden. Eine günstige mittlere Korngröße des Metallpulvers liegt bei höchstens 160 µm, bevorzugt höchstens 70 µm. Eine günstige mittlere Korngröße des Metallgranulats liegt bei höchstens 2 mm. Bei Bedarf können optional andere Korngrößen eingesetzt werden. Das Eisen kann in einer einzigen Körnung vorliegen oder als Mischung von zwei oder mehr Körnungen.

Nach einer günstigen Ausgestaltung ist die Betonmasse wenigstens teilweise aus einer Mischung von Zement und einem Zuschlag gebildet und das Eisen ist Bestandteil des Zuschlags.

Vorzugsweise kann zumindest die Oberflächenschicht durch Zugabe eines sauren Mediums vor und während des Abbindens der Mischung, einen sauren pH-Wert aufweisen oder zumindest einen gegenüber üblichem Beton, der beim Abbinden stark alkalisch ist, einen reduzierten pH-Wert, der eine Oxidation des Eisens wenigstens in der Oberflächenschicht ermöglicht. Das saure Medium kann mit dem Eisen gemischt in die Betonmasse gegeben werden und/oder mit der Oberfläche der Betonmasse in Kontakt gebracht werden, vorzugsweise bei der Herstellung der Betonmasse vor dem Abbinden, während des Abbindens oder nach dem Abbinden der frischen Betonmasse.

Ein günstiges saures Medium ist z.B. Salzsäure, Phosphorsäure, Schwefelsäure, Essigsäure, Zitronensäure, Amidoschwefelsäure, säurehaltige Reinigungsmittel, saure Beize, beispielsweise Eisen(III)-Chlorid-Beize, oder Mischungen davon. Vorteilhaft ist, das unedel Metall, insbesondere Metallpulver, und das saure Medium zu mischen und als feuchte oder nasse Masse zuzugeben. Optional kann das saure Medium auf den ungehärteten oder kurz nach dem Abbinden frisch ausgehärteten Stein aufgetragen werden. Dadurch können die im Betonstein als Zuschlag eingemischten Metallstäube oxidieren, beispielsweise rosten.

Im Folgenden wird ein Betonstein mit einer eingefärbten Oberflächenschicht mit einem Formkörper beschrieben, der durch ein erfindungsgemäßes Verfahren hergestellt ist.

Es wird vorgeschlagen, dass ein Gehalt an Eisen als unedlem Metall wenigstens in einer Oberflächenschicht enthalten ist, die eine Dicke von wenigstens 5 mm aufweist und dass das Eisen zur Erzeugung einer sich im Beton bildenden Oxidfarbe durch Oxidation in wenigstens der Oberflächenschicht vorgesehen ist.

Vorteilhaft kann das Eisen gleichmäßig in der Oberflächenschicht verteilt sein. Dann kann dieses durch eine geeignete chemische Reaktion, insbesondere Oxidation, die gesamte Oberflächenschicht einfärben, wobei ein natürliches Erscheinungsbild der Oberfläche des Betonsteins entsteht. Die Farbwirkung durch die Oxidation bildet sich erst im Stein aus. Die Oberflächenschicht kann gegebenenfalls ihre Farbwirkung durch anhaltende Oxidation des Eisens im Laufe der Zeit weiter verändern.

So gelingt es, beispielsweise durch Zugabe von Eisen, einen "rostenden" Betonstein zu schaffen, dessen Erscheinungsbild der natürlichen Patina eines rostenden Metallkörpers entspricht. Bekannte nachbehandelte Betonsteine zeigen dagegen eine künstlich wirkende Oberfläche, die wie gemalt wirkt, mit "wolkenartigen" hellen und dunklen Bereichen.

Der Begriff Betonstein umfasst einen Betonstein ohne Vorsatzbeton, d.h. ein Vollstein, einen Betonstein mit Kernbeton und Vorsatzbeton, sowie Sonderbauteile, wie z.B. Skulpturen, Tröge, Pflanzgefäße und dergleichen. Ein Betonstein mit Kernbeton und Vorsatzbeton besteht aus zwei Mischungen von Zement und Zuschlag, einer gröberen Mischung für den Kernbeton und einer feineren Mischung für den Vorsatzbeton. Ein Vollstein besteht aus nur einer Mischung. Der Betonstein kann auch ein Fassadenelement sein.

Die Abmessungen des Betonsteins können nach Bedarf gewählt werden.

Der Betonstein kann hergestellt und gegebenenfalls gelagert werden und vor Ort verlegt werden, beispielsweise als Pflasterbelag, Fassadenelement oder dergleichen. Der Betonstein kann insbesondere aus einer Betonmasse, wie vorstehend beschrieben, hergestellt sein.

Ist der Betonstein mit Kernbeton und Vorsatzbeton ausgebildet, dient die Betonmasse mit Eisen als unedlem Metall vorzugsweise zur Bildung des Vorsatzbetons. Der Betonstein kann auch als Vollstein ausgebildet sein, so der ganze Formkörper des Betonsteins aus der Betonmasse mit Eisen gebildet ist.

Das unedle Metall kann Eisen als einziges Metall sein oder auch eine Mischung verschiedenartiger, insbesondere unedler Metalle. Günstig sind Metalle, Eisen, Kupfer, Zink oder dergleichen, die nach Oxidation in der Oberflächenschicht ein farbiges Erscheinungsbild hervorrufen, wie etwa Eisen mit Rost oder Kupfer mit Grünspan. Es ergibt sich eine verbesserte Farbbrillanz durch die sich im Betonstein bildende Oxidfarbe und eine natürliche wirkende Patina der Oberflächenschicht.

Da das Eisen wenigstens in der Oberflächenschicht verteilt ist, die mindestens 5 mm dick ist, kann es nicht zu unerwünschten Abplatzungen kommen, die Oberflächenschicht ist innig mit dem Rest des Formkörpers verbunden, insbesondere stoffschlüssig verbunden. Selbst bei Beschädigungen der Oberfläche bleibt ein Farbeindruck erhalten, da das Eisen wenigstens in der wenigstens 5 mm dicken Oberflächenschicht enthalten ist und dort oxidieren kann. Auch freie Oxidpartikel, beispielsweise Rostpartikel, können auf der Oberfläche liegen, die abgenutzt werden.

Dabei können weitere Oxidationsprozesse, beispielsweise durch Bewitterung, ablaufen, so dass ein veränderter Farbverlauf der Steinoberfläche möglich ist.

Insbesondere kann eine Vorsatzbetonmischung oder die komplette Betonmischung mit Eisen als unedlem Metall versetzt sein, was dem Beton bei Oxidation des Eisens im Betonstein eine typische Oxidfarbe verleiht, ohne dass der Beton selbst die Aufgabe der Oxidation erfüllen muss. Es wird kein Oxid des Eisens beigegeben, sondern das Eisen selbst. Die Oxidationsreaktion des Eisens findet dabei erst im Betonstein statt.

Nach einer günstigen Ausgestaltung kann das Eisen in Form von Metallpulver und/oder Metallgranulat und/oder metallhaltiger Lösung in die Oberflächenschicht eingearbeitet sein. Dies ermöglicht eine homogene Verteilung des Eisens in zumindest der Oberflächenschicht und kann auf einfache Weise in die übliche Herstellung eines Betonsteins integriert werden.

Eine günstige mittlere Korngröße des Metallpulvers liegt bei höchstens 160 µm, bevorzugt höchstens 70 µm. Eine günstige mittlere Korngröße des Metallgranulats liegt bei höchstens 2 mm. Bei Bedarf können optional andere Korngrößen eingesetzt werden. Das Eisen kann in einer einzigen Körnung vorliegen oder als Mischung von zwei oder mehr Körnungen.

Nach einer günstigen Ausgestaltung können wenigstens 5%, vorzugsweise wenigstens 20%, besonders bevorzugt wenigstens 30%, ganz besonders bevorzugt wenigstens 50%, des Eisens bezogen auf das Gewicht an Eisen , das im Zuschlag zugegeben wurde, später nach einigen Stunden, nach der Oxidation in oxidierter Form vorliegen. Über die Zeit kann das vorhandene Eisen im Betonelement weiter oxidieren, wenn dieses an seinem Einsatzort verbaut ist.

Das Eisen wird als Zuschlag gewertet und die Menge üblicherweise in kg/m³ angegeben. Dadurch, dass das Eisen zugegeben wird und eine nennenswerte Oxidationsreaktion des Eisens erst danach einsetzt, bildet sich eine ganz natürlich wirkende Patina nicht nur an der Oberfläche, sondern in der gesamten Oberflächenschicht des Betonsteins, bzw. in dem Bereich, der das Eisen aufweist, aus.

Nach einer günstigen Ausgestaltung kann das Eisen in wenigstens zwei sich um wenigstens 30% in der mittleren Korngröße unterscheidenden Körnungen, vorzugsweise um wenigstens 50%, besonders bevorzugt um wenigstens 100% in der mittleren Korngröße unterscheidenden Körnungen, beigegeben sein. Dies ermöglicht eine gefällige Struktur der Oberflächenschicht. Beispielsweise kann eine Mischung von mittleren Korngrößen des Eisens von höchstens 63 µm mit einem Anteil von 48,4% , von mindestens 63 µm bis 100 µm mit einem Anteil von 31%, mindestens 100 µm mit einem Anteil von 20,4% und mindestens 160 µm mit einem Anteil von 0,2% eingesetzt werden. Ein solches Gemisch beispielswiese aus Eisenpulver kann für einen schönen Rosteffekt ausreichend sein. Eine Mischung an Korngrößen ist günstig, um eine hohe Farbvarianz zu erzielen.

Nach einer günstigen Ausgestaltung können in der Oberflächenschicht Partikel aus edlerem Metall und/oder glanzgebende Partikel angeordnet sein. Dies ermöglicht eine weitere Gestaltung der Oberflächenschicht des Betonsteins durch gezielte reflektierende Effekte.

Nach der Erfindung wird ein Verfahren zur Herstellung eines Betonelements mit einer rostfarben eingefärbten Oberflächenschicht, insbesondere eines Betonsteins mit einem Formkörper oder einer Betonfläche vorgeschlagen, welches Betonelement aus wenigstens einer Mischung von Zement und einem Zuschlag gebildet wird, wobei ein Gehalt an Eisen als unedlem Metall in den Zuschlag beigegeben und eine Oberflächenschicht mit einer Dicke von wenigstens 5 mm gebildet wird, wobei der pH-Wert der Oberflächenschicht durch Zugabe eines sauren Mediums bei der Herstellung der Mischung und/oder beim Abbinden der Mischung und/oder nach dem Abbinden der Mischung zur Erzeugung einer sich im Beton bildenden Rostfarbe durch Oxidation des Eisens in wenigstens der Oberflächenschicht reduziert wird. Das saure Medium kann in die Mischung eingegeben werden oder mit der Oberfläche der Mischung in Kontakt gebracht werden, beispielsweise aufgesprüht, aufgepinselt oder dergleichen werden.

Auf diese Weise kann sichergestellt werden, dass die Oxidation des Eisens durch die gesamte Oberflächenschicht hindurch erfolgt, woraus sich ein natürliches Erscheinungsbild einer oxidierten Oberfläche des Betonsteins ergibt. Ein Abplatzen einer nachträglich aufgetragenen Farbschicht oder Behandlungsschicht kann nicht erfolgen. Das unedle Metall steht für ein reines Metall oder auch ein Gemisch verschiedener unedler Metalle.

Das saure Medium kann vorzugsweise eine wässrige Flüssigkeit sein, insbesondere eine Säure oder ein Säuregemisch. Optional kann das saure Medium Metallkationen und/oder Bestandteile enthalten, die, beispielsweise bei Zugabe von Eisen, eine Salzbildungsreaktionen aus Eisensulfat und Wasserstoff ermöglichen.

Nach einer günstigen Ausgestaltung kann das Eisen in Form von Metallpulver und/oder Metallgranulat und/oder metallhaltiger Lösung mit Ionen des Eisens, insbesondere einer wässrigen Lösung mit Ionen eines Eisens, in die Oberflächenschicht eingearbeitet werden. Dabei kann insbesondere das Eisen in einer einzigen Körnung vorliegen oder in wenigstens zwei sich um wenigstens 30% in der mittleren Korngröße unterscheidenden Körnungen, vorzugsweise um wenigstens 50%, besonders bevorzugt um wenigstens 100% in der mittleren Korngröße unterscheidenden Körnungen, beigegeben werden. Das Eisen kann vorteilhaft dem Zuschlag beigegeben werden und einfach in die Herstellung eines Betonsteins integriert werden.

In einer Ausführung wird das saure Medium direkt während der Herstellung des Betonsteins in die nasse Mischung aus Zement und Zuschlag gegeben. Insbesondere kann dies in einem so genannten "Wetcast"-Verfahren erfolgen. Häufig wird in einem solchen Verfahren Gießbeton in eine Gussform gegeben und gepresst. Optional kann das saure Medium zuerst in die Gussform gegeben und dann die nasse Mischung aus Zement und Zuschlag darauf gegossen werden. Die Oberfläche der Mischung wird so in einen innigen Kontakt mit dem sauren Medium gebracht.

Alternativ oder zusätzlich kann eine Anwendung eines sauren Mediums auch in einem so genannten "Drycast"-Verfahren erfolgen. Bei einem "Drycast"-Verfahren ist die Mischung aus Zement und Zuschlag trockener als bei einem "Wetcast"-Verfahren. Optional kann jeweils zusätzlich oder alternativ ein saures Medium während oder nach dem Abbinden des Betonsteins hinzugegeben werden. Dazu kann das saure Medium auf die Oberflächenschicht aufgesprüht oder in anderer Weise aufgetragen werden.

Das saure Medium reduziert den hohen pH-Wert in der Oberflächenschicht und ermöglicht die Oxidation des Eisens. Das saure Medium kann jeweils mit Eisen und/oder Kationen des Eisens versetzt sein. Vorteilhaft kann als saures Medium Salzsäure, Phosphorsäure, Schwefelsäure, Essigsäure, Zitronensäure, Amidoschwefelsäure, säurehaltige Reinigungsmittel, saure Beize, beispielsweise Eisen(III)-Chlorid-Beize, oder Mischungen davon verwendet werden. Ein günstiger pH-Wert des sauren Mediums liegt bei 0 bis 1. Der Säuregehalt liegt vorzugsweise bei 7% bis 15%. Geringere und höhere Säuregehalte bis 37% sind optional möglich. Sehr saure, auch negative pH-Werte können beispielsweise bei Betonelementen vorteilhaft sein, um den chemischen Prozess der Oxidation bei niedrigen Temperaturen zu beschleunigen.

Nach einer günstigen Ausgestaltung können wasserabweisende und/oder ölabweisende Mittel in die Mischung zugegeben werden und/oder auf die Oberflächenschicht appliziert werden. Damit kann die Oberflächenschicht vor Verschmutzung geschützt werden. Vorteilhaft kann einer Calciumauslagerung, die durch Säureeinwirkung hervorgerufen wird, entgegen gewirkt werden, indem flüssige Silikate in die Mischung zugegeben und/oder auf die Oberflächenschicht appliziert werden. Die Silikate reagieren als Schutz vor aggressiven Medien mit Zementbestandteilen wie Calcium.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine Draufsicht auf einen nachträglich eingefärbten Betonstein nach dem Stand der Technik;
- Fig. 2: eine isometrische Ansicht eines nach einem erfindungsgemäßen Verfahren hergestellten Betonsteins,
- Fig. 3: einen Schnitt durch den Betonstein aus Figur 2.

### Ausführungsform der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

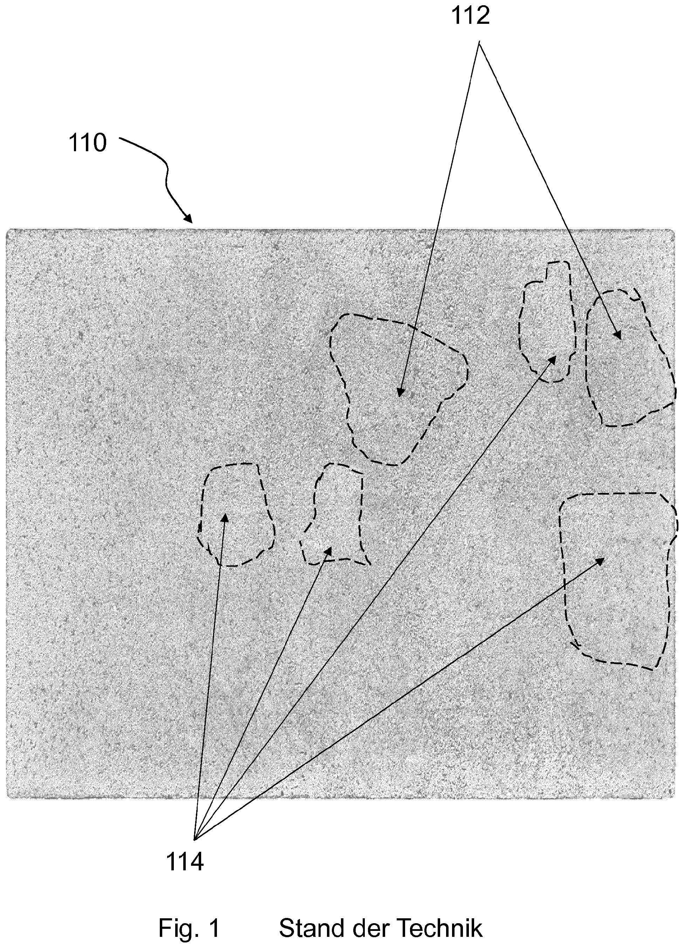

Figur 1 zeigt eine Draufsicht auf einen nachträglich mit Betonbeize eingefärbten Betonstein 110 nach dem Stand der Technik. Durch die Einfärbung der Oberflächenschicht des Betonsteins 110 bilden sich wolkenartige Strukturen mit dunklen Bereichen 112 und hellen Bereichen 114. Insgesamt wirkt die Oberfläche künstlich.

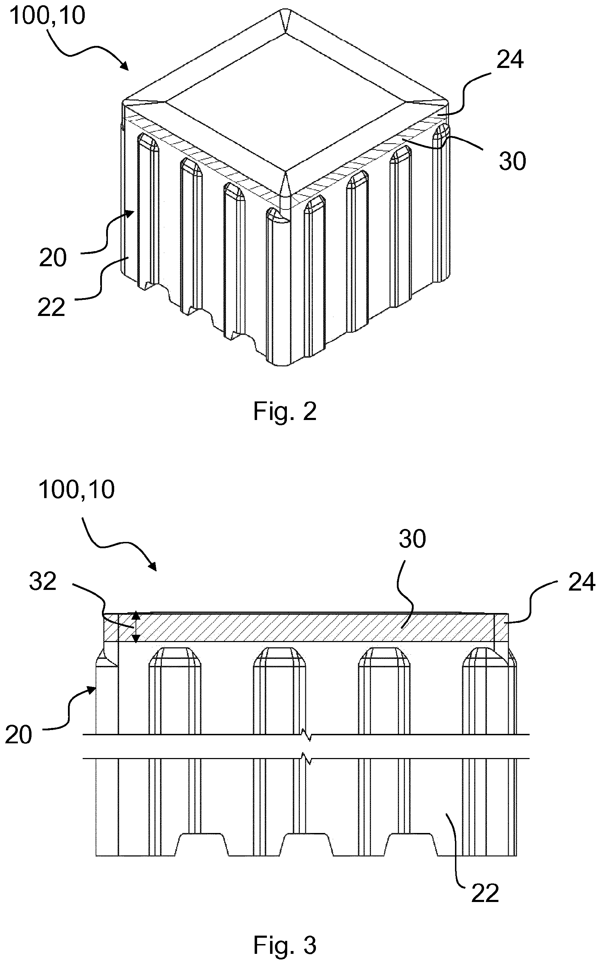

Figuren 2 und 3 zeigen ein Betonelement 100 in Form eines Betonsteins 10, welcher nach einem erfindungsgemäßen Herstellungsverfahren hergestellt ist, wobei Figur 2 eine isometrische Darstellung und Figur 3 eine Schnittdarstellung des Betonsteins 10 zeigt. Der Betonstein 10 ist aus einer Betonmasse zu einem Vollstein oder aus einem Kernbeton mit einem die Betonmasse aufweisenden Vorsatzbeton geformt und anschließend ausgehärtet worden. Der Betonstein 10 kann beispielsweise zum Belegen von begehbaren und/oder befahrbaren Flächen verwendet werden. Der erfindungsgemäßen Betonmasse ist ein Gehalt an wenigstens Eisen als unedlem Metall zugegeben, wobei das Eisen zur

Oxidation in wenigstens einer Oberflächenschicht 30 vorgesehen ist.

Der Betonstein 10 mit einem Formkörper 20 mit wenigstens der aus der Betonmasse aus einer Mischung von Zement und einem Zuschlag gebildeten Oberflächenschicht 30 ist dadurch gekennzeichnet, dass die Oberflächenschicht 30 eine Dicke 32 von wenigstens 5 mm, vorzugsweise 10 mm, aufweist, in der ein Gehalt an Eisen enthalten ist.

Optional kann der Betonstein 10 ein dekorativer Formkörper sein, wie beispielsweise eine Skulptur der dergleichen, der nicht zum Begehen oder Befahren vorgesehen ist. Das Betonelement 100 kann ferner eine Betonfläche sein, bei der die Betonmasse vor Ort aufgetragen und ausgehärtet wird. Die Betonmasse kann auf einen Untergrund aufgetragen werden, beispielsweise auf eine Wand als Fassade, auf eine Bodenfläche als Belag, oder dergleichen.

Das unedle Metall ist Eisen. Insbesondere ist das Eisen gleichmäßig in der Oberflächenschicht 30 verteilt, so dass die Oberflächenschicht 30 den Anschein einer natürlichen Patina bewirkt, wenn das Eisen im Betonstein 10 oxidiert.

Das Eisen wird bei der Herstellung in Form von Metallpulver und/oder Metallgranulat und/oder metallhaltiger Lösung in die Oberflächenschicht 30 eingearbeitet. Das Eisen kann trocken in die Zementmischung eingegeben werden. Optional kann mit dem Metallpulver bzw. Metallgranulat und Wasser eine flüssige Farbe hergestellt werden, die in die Zementmischung eingegeben wird.

Der Formkörper 20 ist aus einem ersten Bereich 22 aus gröberem Kernbeton und einem zweiten Bereich 24 aus feinerem Vorsatzbeton gebildet. Die Oberflächenschicht 30 bildet den zweiten Bereich 24. Die Oberflächenschicht 30 kann insbesondere vor und während des Abbindens der nassen Mischung aus Zement und Zuschlag einen pH-Wert aufweisen der geringer ist als der übliche alkalische pH-Wert der Mischung, indem der pH-Wert der Mischung durch Zugabe eines sauren Mediums, etwa einer Säure oder einem Säuregemisch, reduziert wird. Vorzugsweise kann der pH-Wert in der Oberflächenschicht 30 dadurch in den sauren Bereich verschoben werden. Das saure Medium kann in das Gemisch eingegeben werden und/oder mit der Oberfläche des Gemisches in Kontakt gebracht werden.

Mit Vorteil wird das Eisen in wenigstens zwei sich um wenigstens 30% in der mittleren Korngröße unterscheidenden Körnungen, beigegeben. Optional kann das Eisen jedoch auch in einer einzigen Körnung vorliegen.

Optional können in der Oberflächenschicht 30 Partikel aus edlerem Metall und/oder glanzgebende Partikel angeordnet sein.

Zur Herstellung des Betonsteins 10 mit dem Formkörper 20 mit der aus einer Mischung von Zement und einem Zuschlag gebildeten Oberflächenschicht 30, wird die Oberflächenschicht 30 mit einer Dicke 32 von wenigstens 5 mm gebildet, indem ein Gehalt an Eisen in den Zuschlag beigegeben wird. Der pH-Wert der Oberflächenschicht 30 wird durch Zugabe eines sauren Mediums und/oder Auftragen eines sauren Mediums bei der Herstellung der Mischung und/oder beim Abbinden der Mischung und/oder nach dem Abbinden der Mischung zur Oxidation des Eisens in der Oberflächenschicht 30 reduziert. Dadurch kann eine praktisch sofortige Oxidation des Eisens bei der Herstellung des Betonsteins 10 erfolgen. Das saure Medium kann in die Mischung eingegeben werden oder mit der Oberfläche der Mischung in Kontakt gebracht werden, beispielsweise aufgetragen, aufgesprüht und dergleichen werden.

Optional können wasserabweisende und/oder ölabweisende Mittel in die Mischung zugegeben werden und/oder auf die Oberflächenschicht 30 appliziert werden, womit bei der Herstellung der Feuchtegehalt im Betonstein 10 kontrolliert werden kann, um eine optimale Oxidation des Eisens in der Oberflächenschicht 30 zu ermöglichen.

Unterstützt werden kann die Oxidation des Eisens in der Oberflächenschicht 30 durch Oberflächenbearbeitung, insbesondere durch wenigstens eines der Verfahren Schleifen, Strahlen, Bürsten, Klopfen, Kollern, Fräsen, Brechen.

Die Oxidation kann zusätzlich oder alternativ gefördert werden, indem der Betonstein 10 über eine Lagerzeit in einer feuchten Atmosphäre gehalten wird. Dabei kann der Betonstein 10 über eine Lagerzeit mit einer wasserundurchlässigen Folie umhüllt und/oder gezielt einer Bewitterung ausgesetzt werden. Durch die Farbe des Oxids ist die Oberflächenschicht eingefärbt, ohne dass die üblichen Probleme mit Abplatzungen von der Oberfläche zu befürchten sind. Die Anmutung der Oberfläche entspricht dem natürlichen Erscheinungsbild einer beispielsweise rostigen Oberfläche mit feiner Textur, ohne die wolkenartigen hellen und dunklen Bereiche 112, 114, die aus dem Stand der Technik nach Figur 1 bekannt sind.

Optional kann zur Förderung der Oxidation eine Erhöhung der Außentemperatur erfolgen, z.B. durch Beheizen der Kammer, des Raumes etc., worin die Betonsteine 10 gelagert werden.

## Patentansprüche

1. Verfahren zur Herstellung eines Betonelements (100) mit einer eingefärbten Oberflächenschicht, insbesondere eines Betonsteins (10) mit einem Formkörper (20) oder einer Betonfläche, welches Betonelement (100) aus wenigstens einer Mischung von Zement und einem Zuschlag mit einem unedlen Metall gebildet wird, wobei das unedle Metall chemisch unter Erzeugung eines Farbtons reagiert, **dadurch gekennzeichnet, dass** ein Gehalt an Eisen als unedlem Metall in den Zuschlag beigegeben und wenigstens eine Oberflächenschicht (30) mit einer Dicke (32) von wenigstens 5 mm gebildet wird, wobei der pH-Wert der Oberflächenschicht (30) durch Zugabe eines sauren Mediums bei der Herstellung der Mischung und/oder beim Abbinden der Mischung und/oder nach dem Abbinden der Mischung zur Erzeugung einer sich im Beton bildenden Oxidfarbe durch Oxidation des Eisens in wenigstens der Oberflächenschicht (30) reduziert wird, wobei sich eine natürlich wirkende Patina eines rostenden Metallkörpers in dem Bereich ausbildet, der das unedle Metall aufweist.

2. Verfahren nach Anspruch 1 , **dadurch gekennzeichnet, dass** das Eisen in Form von Metallstaub und/oder Metallgranulat und/oder metallhaltiger Lösung mit Ionen des Eisens, in die Oberflächenschicht (30) eingearbeitet wird.

3. Verfahren nach Anspruch 2, **dadurch gekennzeichnet, dass** das Eisen in wenigstens zwei sich um wenigstens 30% in der mittleren Korngröße unterscheidenden Körnungen, vorzugsweise um wenigstens 50%, besonders bevorzugt um wenigstens 100% in der mittleren Korngröße unterscheidenden Körnungen, beigegeben wird.

4. Verfahren nach einem der vorgehenden Ansprüche, **dadurch gekennzeichnet, dass** der Formkörper (20) wenigstens bereichsweise aus einer Mischung von Zement und dem Zuschlag gebildet wird und das Eisen Bestandteil des Zuschlags ist.

5. Verfahren nach einem der vorhergehenden Ansprüche, **dadurch gekennzeichnet, dass** der Formkörper (20) aus einem ersten Bereich (22) aus Kernbeton und einem zweiten Bereich (24) aus Vorsatzbeton gebildet wird und der zweite Bereich (24) die Oberflächenschicht (30) aufweist, vorzugsweise durch die Oberflächenschicht (30) gebildet wird.

6. Verfahren nach Anspruch 5, **dadurch gekennzeichnet, dass** der erste Bereich (22) vor einer Oxidationsreaktion von dem Eisen durchsetzt wird.

7. Verfahren nach einem der vorhergehenden Ansprüche, **dadurch gekennzeichnet, dass** wasserabweisende und/oder ölabweisende Mittel in die Mischung zugegeben werden und/oder auf die Oberflächenschicht (30) appliziert werden.

8. Verfahren nach einem der vorhergehenden Ansprüche, **dadurch gekennzeichnet, dass** in den Zuschlag der Mischung Partikel aus edlerem Metall und/oder glanzgebende Partikel zugemischt werden.

9. Verfahren nach einem der vorhergehenden Ansprüche, **dadurch gekennzeichnet, dass** die Oxidation des Eisens in der Oberflächenschicht (30) durch Oberflächenbearbeitung unterstützt wird, insbesondere durch wenigstens eines der Verfahren Schleifen, Strahlen, Bürsten, Klopfen, Kollern, Fräsen, Brechen.

10. Verfahren nach einem der vorhergehenden Ansprüche, **dadurch gekennzeichnet, dass** der Betonstein (10) über eine Lagerzeit in einer feuchten Atmosphäre gehalten wird, insbesondere wobei der Betonstein (10) über eine Lagerzeit mit einer wasserundurchlässigen Folie umhüllt und/oder erhöhter Temperatur und/oder gezielt einer Bewitterung ausgesetzt wird.

## Claims

1. Method for manufacturing a concrete element (100) with a coloured surface layer, in particular a concrete block (10) with a shaped body (20) or a concrete surface, which concrete element (100) is formed from at least a mixture of cement and an aggregate comprising a base metal, wherein the base metal reacts chemically to produce a colour tone, **characterised in that** a content of iron as base metal is added to the aggregate and at least one surface layer (30) with a thickness (32) of at least 5 mm is formed, wherein the pH value of the surface layer (30) is reduced by adding an acidic medium during the preparation of the mixture and/or during the setting of the mixture and/or after the setting of the mixture to produce an oxide colour that forms in the concrete by oxidation of the iron in at least the surface layer (30), wherein a naturally acting patina of a rusting metal body forms in the region comprising the base metal.

2. Method according to claim 1, **characterized in that** the iron is incorporated into the surface layer (30) in the form of metal dust and/or metal granulate and/or metal-containing solution comprising ions of the iron.

3. Method according to claim 2, **characterised in that** the iron is added in at least two granularities differing by at least 30% in the average grain size, preferably granularities differing by at least 50%, particularly preferably by at least 100% in the average grain size.

4. Method according to any one of the preceding claims, **characterised in that** the shaped body (20) is formed at least partially from a mixture of cement and an aggregate and the iron is a constituent of the aggregate.

5. Method according to any one of the preceding claims, **characterised in that** the shaped body (20) is formed from a first region (22) of core concrete and a second region (24) of facing concrete and the second region (24) has the surface layer (30), and is preferably formed by the surface layer (30).

6. Method according to claim 5, **characterised in that** the first region (22) is penetrated by the iron prior to an oxidation reaction.

7. Method according to any one of the preceding claims, **characterised in that** water-repellent and/or oil-repellent agents are added to the mixture and/or applied to the surface layer (30).

8. Method according to any one of the preceding claims, **characterised in that** particles of more noble metal and/or brightening particles are added to the mixture.

9. Method according to any one of the preceding claims, **characterised in that** the oxidation of the iron in the surface layer (30) is supported by surface treatment, in particular by at least one of the methods grinding, blasting, brushing, tapping, rolling, milling, breaking.

10. Method according to any one of the preceding claims, **characterised in that** the concrete block (10) is kept in a humid atmosphere for a storage time, in particular wherein the concrete block (10) is wrapped with a water-impermeable film for a storage time and/or exposed to elevated temperature and/or targeted weathering.

## Revendications

1. Procédé de fabrication d'un élément en béton (100) avec une couche superficielle colorée, en particulier un bloc de béton (10) avec un corps moulé (20) ou une surface de béton, lequel élément en béton (100) est formé d'au moins un mélange de ciment et d'un agrégat avec un métal de base, dans lequel le métal de base réagit chimiquement produisant une teinte de couleur, **caractérisée en ce qu'**une teneur en fer comme métal de base est ajoutée à l'agrégat et au moins une couche superficielle (30) avec une épaisseur (32) d'au moins 5 mm est formée, dans laquelle la valeur pH de la couche superficielle (30) est réduite par l'ajout d'un milieu acide lors de la fabrication du mélange et/ou lors de la prise du mélange et/ou après la prise du mélange pour produire une couleur d'oxyde se formant dans le béton par oxydation du fer dans au moins la couche superficielle (30), dans laquelle une patine à action naturelle d'un corps métallique rouillé se formant dans la zone qui présente le métal de base.

2. Procédé selon la revendication 1, **caractérisé en ce que** le fer est incorporé dans la couche superficielle (30) sous forme de poussière métallique et/ou de granulés métalliques et/ou de solution contenant des métaux avec des ions du fer.

3. Procédé selon la revendication 2, **caractérisé en ce que** le fer est incorporé dans au moins deux granulations différant d'au moins 30 % dans la granulométrie moyenne, de préférence d'au moins 50 %, le plus préférentiellement d'au moins 100 % dans la granulométrie moyenne.

4. Procédé selon l'une quelconque des revendications précédentes, **caractérisé en ce que** le corps moulé (20) est formé au moins partiellement d'un mélange de ciment et de l'agrégat et le fer est une partie constituante de l'agrégat.

5. Procédé selon l'une quelconque des revendications précédentes, **caractérisé en ce que** le corps moulé (20) est formé d'une première zone (22) en béton de cœur et d'une seconde zone (24) en béton de parement et que la deuxième zone (24) présentant la couche superficielle (30) est de préférence formée par la couche superficielle (30).

6. Procédé selon la revendication 5, **caractérisé en ce que** la première zone (22) est pénétrée par le fer avant une réaction d'oxydation.

7. Procédé selon l'une quelconque des revendications précédentes, **caractérisé en ce que** des agents hydrofuges et/ou oléofuges sont ajoutés au mélange et/ou sont appliqués sur la couche superficielle (30).

8. Procédé selon l'une quelconque des revendications précédentes, **caractérisé en ce que** des particules de métal plus noble et/ou des particules brillantes sont mélangées dans l'agrégat du mélange.

9. Procédé selon l'une quelconque des revendications précédentes, **caractérisé en ce que** l'oxydation du fer dans la couche superficielle (30) est soutenue par un traitement de surface, en particulier par au moins un des procédés de meulage, décapage, brossage, cognement, culbutage, fraisage, cassage.

10. Procédé selon l'une quelconque des revendications précédentes, **caractérisé en ce que** le bloc de béton (10) est maintenu dans une atmosphère humide pendant une durée de stockage, en particulier dans lequel le bloc de béton (10) est, pendant une durée de stockage, enveloppé dans un film imperméable à l'eau et/ou est exposé à une température élevée et/ou de manière ciblée à des intempéries.
